# EUROPEAN PATENT APPLICATION

(11) **EP 2 719 730 A1**
(43) Date of publication of application: **16.04.2014**
(21) Application number: 12801052.7
(22) Date of filing: 07.06.2012
(51) Int. Cl.: C08L 101/00, B01D 69/12, B01D 71/10, B01D 71/28, B01D 71/34, B01D 71/58, B82Y 30/00, B82Y 40/00, C08J 3/07, C08L 79/00, D01F 1/00, D04H 1/72, H01M 2/16

(54) **SOLUTION OF NANOPARTICULATE FIBERS, PROCESS FOR PRODUCING SAME, AND FILTER CONSTITUTED OF NANOPARTICULATE FIBERS**

(30) Priority: 13.06.2011 JP 2011131493; 21.07.2011 JP 2011159516
(71) Applicant: National Institute for Materials Science, Tsukuba-shi, Ibaraki 305-0047 (JP)
(72) Inventor: ICHINOSE, Izumi, Tsukuba-shi Ibaraki 305-0047 (JP); SAMITSU, Sadaki, Tsukuba-shi Ibaraki 305-0047 (JP); WANG, Qifeng, Tsukuba-shi Ibaraki 305-0047 (JP)
(74) Representative: Vossius & Partner
(86) International application number: PCT/JP2012/064639
(87) International publication number: WO 2012/173031

(57) **Abstract**

Objects of the invention are to provide a solution in which polymer nanofibers are highly dispersed without undergoing gelation and precipitation, its fabrication process, and a polymer nanofiber membrane filter.

Those objects are achievable by use of the nanoparticulate fiber solution in which the nanoparticulate fibers 30 are dispersed in the poor solvent 42, wherein the nanoparticulate fibers each comprise an elongated segment in which a plurality of nanoparticles 11 are linked together and elongated, and a branching segment in which the elongated segment is branched off, and the polymer molecules are entangled up and aggregated with the molecule of the poor solvent 42 held between said polymer molecules. The polymer used herein should preferably have any one substituent of a hydroxyl group, an amino group or a fluoro group, as shown in Fig. 1.

## Description

### FIELD OF THE INVENTION

The present invention relates to a nanoparticulate fiber solution, its fabrication process, and a nanoparticulate fiber membrane filter.

Polymer nanofibers are now used as filters, adsorbents, composites and so on, and have a wide range of applications in the industrial, biological and ecological fields.

For instance, thin films composed of polymer nanofibers are used as ultrafiltration membranes, microfiltration membranes, high-performance filters, and separators for lithium butteries. Ordinary industrial ultrafiltration membranes are fabricated by a phase separation process. In the phase separation process, there is a porous material formed through aggregation of the polymer caused by temperature drops or mixing with a poor solvent. In this case, pores are formed from the solvent part. With this process, however, it is still not easy to form pores of less than 10 nanometers because the polymer is diffused and aggregated, giving rise to pores of more than 10 nanometers.

Filter makers in the bioindustry field fabricate ultrafiltration membranes by casting a polymer solution over a porous, microfiltration membrane, followed by the phase separation process. This process of casing a polymer solution over the microfiltration membrane is used for the fabrication of a lot of composite membranes. However, the polymer solution (casting solution) penetrates deep into the microfiltration membrane, giving rise of a flux decrease.

Polymer nanofibers may be formed by an electrospinning process. With this process, high voltage is applied to a polymer solution upon jetting of it onto a substrate from the end of a nozzle to form the polymer into fibers for deposition (Non-Patent Publication 1). The electrospinning process may be applied to a variety of polymers to obtain polymer nanofibers having a diameter of about 50 nanometers to about 1 micrometer in general. Although this process has demerits of having a very slow spinning rate and being likely to result in a particulate mass with a decreasing fiber diameter, it is enjoining primary use in the medical field because of its merit of fabricating an unwoven fabric of biocompatible polymer nanofibers. With this process, however, it is difficult to obtain dispersion liquids because there are polymer nanofibers formed in a gas phase.

Polymer nanofibers may also be formed by melt spinning of a blend polymer. As an island polymer is dispersed in a blend polymer having a sea-island structure, it causes the island polymer to be stretched in the spinning step, and removal of a sea polymer results in polymer nanofibers of about 60 nanometers in diameter. Such polymer nanofibers may be processed into a product form such as an unwoven fabric (Non-Patent Publication 2). Those polymer nanofibers may be dissolved by cutting and beating in a solvent; however, there is some limitation on the degree of dispersion with mechanical beating.

Aubert reports that crystalline isotactic polystyrene is used to fabricate polymer nanofibers of about 50 nanometers in diameter from in a nitrobenzene solution by the TIPS process (Non-Patent Publication 3). The isotactic polystyrene is insoluble in nitrobenzene at normal temperature, and Aubert reports that a polymer solution heated to 175°C is prepared. As this solution is cooled down to near room temperature, it causes the polymer solution to undergo a liquid-liquid phase separation, resulting in gelation. With the process making use of such a phase separation, polymer nanofibers of less than 100 nanometers may be fabricated in a solution, but any liquid dispersion cannot be obtained, resulting in solidification of the solution simultaneously with the formation of polymer nanofibers.

A surface active agent is known to be self-organized in water to form relatively rigid polymer nanofibers. With an electrically conductive polymer with polythiophene as a main chain, there are polymer nanofibers formed by self-organization, yielding polymer nanofibers of 30 nanometers in diameter and less than 5 nanometers in thickness (Non-Patent Publication 4). In this case, however, an oligomer of polythiophene with the same molecular length is used, and what is obtained is nothing more than a needle crystal.

A biopolymer such as collagen is self-organized in water to form polymer nanofibers. Such polymer nanofibers, because of having high biodegradation, are used in the foodstuffs and medical fields. As well known in the art, biopolymers form a diversity of polymer nanofibers; however, they have only limited applications because they are not synthetic ones and susceptible of biodegradation.

A block polymer showing surface activity forms a string-like aggregate in water that looks like polymer nanofibers. However, this aggregate is soft so much so that there is difficulty in separation by filtration or the like.

As far as the polymer nanofibers known so far in the art are concerned in general, any polymer nanofiber solution highly dispersed in a solvent cannot be found out. Synthetic polymers are soluble in a good solvent, but at lower temperatures or with the addition of a poor solvent, they generally aggregate resulting in gelation or precipitation. In other words, it is still difficult to fabricate from common synthetic polymers polymer nanofibers that may exist while dispersed in a solvent.

### LISTING OF THE PRIOR ART

### Non-Patent Publications

Non-Patent Publication 1: Huang, et al., Composites Science and Technology, Vol. 63, pp. 2223-2253, 2003, "A review on polymer nanofibers by electrospinning and their applications in composites"
Non-Patent Publication 2: Takashi Ochi, "Fibers and Industries", Vol. 63 (12), pp. 35-37, 2007, "Development of Melt-Spun Type Nanofibers"
Non-Patent Publication 3: Aubert, Macromolecules, Vol. 21, pp. 3468-3473, 1988, "Isotactic polystyrene phase diagrams and physical gelation"
Non-Patent Publication 4: Samitsu, et al., Macromolecules, Vol. 41, pp. 8000-8010, 2008, "Effective production of poly(3-alkylthiophene) nanofibers by means of whisker method using anisole solvent: structural, optical, and electrical properties"

### SUMMARY OF THE INVENTION

### OBJECTS OF THE INVENTION

The present invention has for its objects to provide a solution in which polymer nanofibers are highly dispersed without undergoing gelation and precipitation, its fabrication process, and a polymer nanofiber membrane filter.

### EMBODIMENTS OF THE INVENTION

As a result of repeated experiments with trials and errors, we have found out that by rapid mixing of a polymer solution with a poor solvent, there are nanoparticles formed which are then linked together to form nanoparticulate fibers in a thickness range of a few nanometers to 100 nanometers, thereby preparing a solution having said nanoparticulate fibers highly dispersed in the poor solvent without being gelled and precipitated.

The present invention is embodied as follows.
(1) A nanoparticulate fiber solution having nanoparticulate fibers dispersed in a poor solvent, characterized in that said nanoparticulate fibers each comprise an elongated segment where a plurality of nanoparticles are linked together and elongated, and a branching segment where said elongated segment is branched off, wherein said nanoparticles each comprise polymer molecules and molecules of said poor solvent, and said polymer molecules are entangled up and aggregated with the molecules of said poor solvent being held between said polymer molecules.
(2) The nanoparticulate fiber solution as recited in (1), characterized in that said polymer has any one substituent of a hydroxyl group, an amino group or a fluoro group.
(3) The nanoparticulate fiber solution as recited in (2), characterized in that said polymer is a copolymer comprising a monomer having any one substituent of a hydroxyl group, an amino group or a fluoro group.
(4) The nanoparticulate fiber solution as recited in any one of (1) to (3), characterized in that said poor solvent is water or an alcohol.
(5) The nanoparticulate fiber solution as recited in any one of (2) to (4), characterized in that the molecule of said poor solvent forms a hydrogen bond with said hydroxyl group or said amino group, or there is a hydrophobic interaction occurring between the molecule of said poor solvent and a group other than said fluoro group.
(6) The nanoparticulate fiber solution as recited in (1), characterized in that said polymer is at least one polymer selected from the group consisting of polyvinyl phenol, polyaniline, polyvinylidene fluoride, cellulose, and polystyrene.
(7) A process of fabricating the nanoparticulate fiber solution as recited in any one of (1) to (6), characterized by comprising a step of dispersing a polymer in a good solvent to form a polymer solution, and a step of adding and stirring said polymer solution into and with a poor solvent.
(8) The process of fabricating the nanoparticulate fiber solution as recited in (7), characterized in that said good solvent is an organic solvent.
(9) The process of fabricating the nanoparticulate fiber solution as recited in (7) or (8), characterized in that said polymer solution has a polymer concentration of 0.05 mg/mL to 5 mg/mL inclusive.
(10) The process of fabricating the nanoparticulate fiber solution as recited in any one of (7) to (9), characterized in that said nanoparticulate fiber solution has a polymer concentration ranging from 0.002 mg/mL to 0.2 mg/mL inclusive.
(11) A nanoparticulate fiber membrane filter comprising nanoparticulate fibers each comprising an elongated segment where a plurality of nanoparticles are linked together and elongated, and a branching segment where said elongated segment is branched off, characterized in that networked polymer nanoparticles of 1 nanometer to 100 nanometers inclusive in diameter are laminated together in a filter cake form of 50 nanometers to 1,000 nanometers inclusive in thickness.
(12) The nanoparticulate fiber membrane filter as recited in (11), characterized in that said polymer nanoparticles have a diameter of 10 nanometers to 50 nanometers inclusive.
(13) The nanoparticulate fiber membrane filter as recited in (11) or (12), characterized in that nanoparticles of said polymer are laminated together in a filter cake form of 100 nanometers to 500 nanometers inclusive in thickness.
(14) The nanoparticulate fiber membrane filter as recited in any one of (11) to (13), characterized in that said polymer has any one substituent of a hydroxyl group, an amino group or a fluoro group.
(15) A nanoparticulate fiber membrane filter, which is obtained by filtering off the nanoparticulate fiber solution recited in any one of (1) to (6) and aggregating the nanoparticulate fibers into a membrane form.
(16) The nanoparticulate fiber membrane filter as recited in any one of (11) to (15), characterized by having pores of 1 nanometer to 100 nanometers inclusive in diameter.
(17) The nanoparticulate fiber membrane filter as recited in any one of (11) to (16), characterized by including a molecule having a lower vapor pressure.
(18) The nanoparticulate fiber membrane filter as recited in (17), characterized in that said molecule having a low vapor pressure is a molecule selected from the group consisting of glycerol, ethylene glycol, and polyethylene oxide.

### ADVANTAGES OF THE INVENTION

The nanoparticulate fiber solution of the invention comprises nanoparticulate fibers dispersed in a poor solvent. Each nanoparticulate fiber includes an elongated segment where a plurality of nanoparticles are linked together and a branching segment where said elongated segment is branched off. Each nanoparticle comprises a polymer and a molecule of said poor solvent. Polymer molecules are entangled up and aggregated, and the molecule of the poor solvent is held between the polymer molecules. It is thus possible to obtain a solution in which the nanoparticulate fibers having high mechanical strength due to interactions between the nanoparticles are highly dispersed without undergoing gelation and precipitation.

The process of fabricating a nanoparticulate fiber solution according to the invention is provided for the fabrication of the aforesaid nanoparticulate fiber solution. This process comprises the step of dispersing the polymer in a good solvent to prepare a polymer solution, and the step of adding and stirring the polymer solution into and with a poor solvent. It is thus possible to form nanoparticles of 1 nanometer to 100 nanometers inclusive, form a nanoparticulate fiber having said nanoparticles linked together, and easily fabricate a nanoparticulate fiber solution in which the nanoparticulate fibers are highly dispersed without undergoing gelation and precipitation.

The present invention provides a nanoparticulate fiber membrane filter in which networked polymer nanoparticles of 1 nanometer to 100 nanometers inclusive in diameter are laminated together in a filter cake form of 50 nanometers to 1,000 nanometers inclusive in thickness. The membrane filter of the invention can thus have higher mechanical strength, and can be more thinned as well. Even when it is formed on a filter, it is possible to prevent the flux from going down because there is a risk of penetration of the polymer solution deep into the filter. It is also possible to achieve a membrane filter having pores of 1 nanometer to 100 nanometers inclusive in diameter, which filter enables a given substance of 1 nanometer to 100 nanometers inclusive in diameter to be separated off. This membrane filter is better in mechanical strength and handleability than a conventional regenerated cellulose composite membrane.

### BRIEF DESCRIPTION OF THE DRAWINGS

Fig. 1 is a schematic view of one example of the inventive nanoparticulate fiber solution.
Fig. 2 is a schematic view of one example of nanoparticulate fibers.
Fig. 3 is a set of schematic views of one example of nanoparticles.
Fig. 4 is a process diagram for one example of the inventive process of fabricating a nanoparticulate fiber solution.
Fig. 5 is a set of schematic views of one example of the nanoparticulate fiber membrane filter according to the invention.
Fig. 6 is an enlarged schematic view of one example of the nanoparticulate fiber membrane filter according to the invention.
Fig. 7 is an enlarged schematic view of one example of the nanoparticulate fiber membrane filter according to the invention.
Fig. 8 is an STEM image of the PVPh nanoparticulate fibers according to Example 1.
Fig. 9 is an enlarged STEM image of the PVPh nanoparticulate fibers according to Example 1.
Fig. 10 is a sectional SEM image of the PVPh nanoparticulate fiber membrane filter according to Example 1.
Fig. 11 is a surface SEM image of the PVPh nanoparticulate fiber membrane filter according to Example 1.
Fig. 12 is a graph indicative of the filtration performance of the membrane filter prepared in Example 1 for 10-nm gold nanoparticles.
Fig. 13 is a graph indicative of the filtration performance of the membrane filter prepared in Example 1 for 5-nm gold nanoparticles.
Fig. 14 is an STEM image of the PANI nanoparticulate fibers according to Example 2.
Fig. 15 is an enlarged STEM image of the PANI nanoparticulate fibers according to Example 2.
Fig. 16 is a sectional SEM image of the PANI nanoparticulate fiber membrane filter according to Example 2.
Fig. 17 is a surface SEM image of the PANI nanoparticulate fiber membrane filter according to Example 2.
Fig. 18 is a graph indicative of the filtration performance of the membrane filter prepared in Example 2 for 10-nm gold nanoparticles.
Fig. 19 is a STEM image of the polyvinylidene fluoride nanoparticulate fibers according to Example 3.
Fig. 20 is an enlarged view of Fig. 19.
Fig. 21 is a sectional SEM image of the polyvinylidene fluoride nanoparticulate fiber membrane filter according to Example 3.
Fig. 22 is a surface SEM image of the polyvinylidene fluoride nanoparticulate fiber membrane filter according to Example 3.
Fig. 23 is a surface SEM image of the cellulose nanoparticulate fiber membrane filter according to Example 6.
Fig. 24 is a surface SEM image of the polystyrene nanoparticulate fiber membrane filter according to Example 7.

### MODE FOR CARRYING OUT THE INVENTION

### (Embodiments of the Invention)

The nanoparticulate fiber solution and its fabrication process as well as the nanoparticulate fiber membrane filter - some specific embodiments of the invention - will now be explained with reference to the accompanying drawings. Unless defined otherwise, all technical and scientific terms used herein have the same meaning as commonly understood by one of ordinary skill in the art to which this invention belongs. Also, unless indicated otherwise, except within the claims, the use of "or" includes "and" and vice versa. Non-limiting terms are not to be construed as limiting unless expressly stated or the context clearly indicates otherwise (for example, "including", "having" and "comprising" typically indicating "including without limitation". Singular forms such as "a", "an" and "the" include the plural reference unless expressly stated otherwise.

### (Nanoparticulate Fiber Solution)

First of all, the nanoparticulate fiber solution is explained.

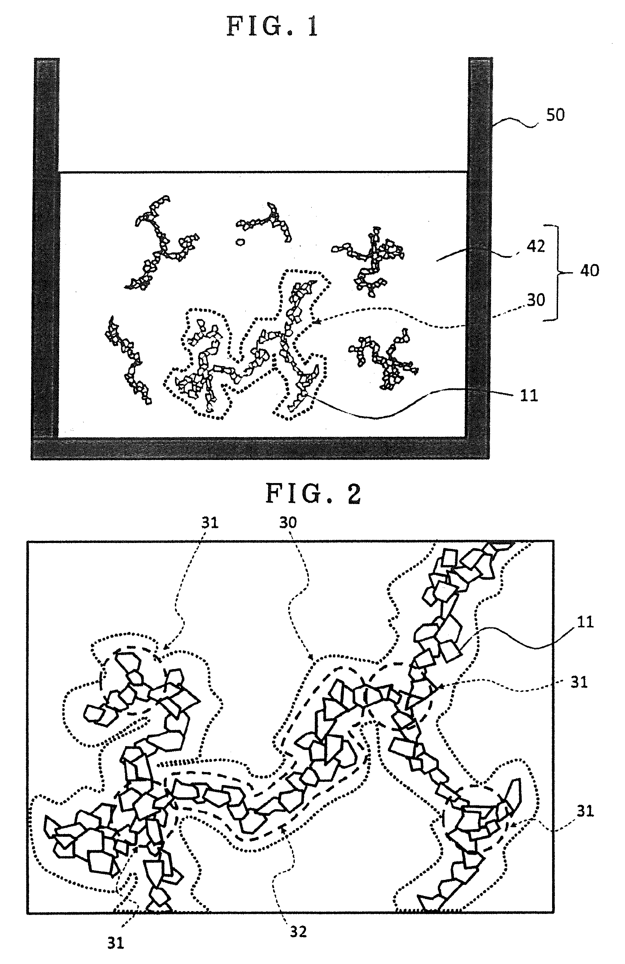

Fig. 1 is illustrative in schematic of one example of the nanoparticulate fiber solution according to one embodiment of the invention.

As shown in Fig. 1, a nanoparticulate fiber solution 40 according to one embodiment of the invention comprises nanoparticulate fibers 30 dispersed in a poor solvent 42 filled up in a vessel 50. Each nanoparticulate fiber 30 comprises a plurality of nanoparticles 11 linked together.

For the poor solvent 42, there may be water, an alcohol or a mixed solvent thereof selected, among which water or the alcohol is preferred. The alcohol used herein may be methanol, ethanol, propanol, butanol or the like. Alternatively, polar solvents equivalent to alcohols such as acetonitrile or acetone may be used alone or in admixture of two or more.

The nanoparticulate fiber solution 40 is a transparent dispersion liquid with no gelation or precipitation, and with no phase separation in a bulk state.

Fig. 2 is illustrative in schematic of one example of nanoparticulate fibers.

As shown in Fig. 2, the nanoparticulate fiber 30 comprises an elongated segment 32 where a plurality of nanoparticles 11 are linked together and elongated.

The nanoparticulate fiber 30 can have high mechanical strength because of being formed of a plurality of nanoparticles 11 linked together.

The elongated segment 32 has a thickness in a range of 1 nanometer to 100 nanometers, often in a range of 10 nanometers to 50 nanometers.

The elongated segment 32 is branched off at a branching segment 31. The nanoparticulate fiber 30, because of comprising the branching segment 31, is allowed to have a network form that may have an expanse of about 10 micrometers as viewed on a plane.

The nanoparticulate fiber 30 may be stored for a few days at room temperature.

The nanoparticulate fiber 30 may be modified such that it can exist stably for a period of over two weeks.

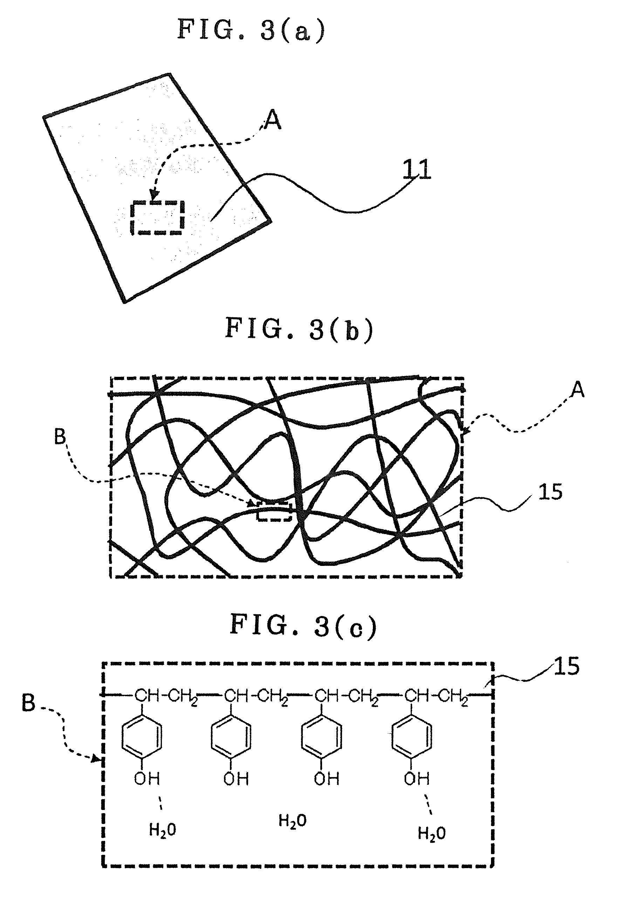

Fig. 3 is a set of schematic views of one example of nanoparticles. Fig. 3(a) is a plan view.

As shown in Fig. 3(a), a nanoparticle 11 is in a substantially rectangular shape as viewed on a plane by way of example but not by way of limitation. For instance, the nanoparticle may be in a substantially circular or polygonal form as viewed on a plane. The steric shape of the nanoparticle may be substantially spherical, rod-like, prismatic, pyramidal or conical.

The diameter of the nanoparticle 11 may be 1 nanometer to 100 nanometers inclusive.

Fig. 3(b) is an enlarged schematic view of an area A of Fig. 3(a), showing that the nanoparticle 11 is constructed by entanglement and aggregation of polymer molecules 15.

Fig. 3(c) is an enlarged schematic view of an area B of Fig. 3(b), showing that the polymer 15 is polyvinyl phenol, and the molecule of a poor solvent 42 is a water molecule.

As shown in Figs. 3(b) and 3(c), the molecules of the poor solvent 42 are held between the polymer molecules 15. Some of the molecules (water molecules) between the polymer chains of the polymer 15 are bonded to hydroxyl groups on the polymer 15 via hydrogen bonds.

The presence of the molecules of the poor solvent 42 between the polymer molecules 15 causes fluctuations of the surface polymer chains of the nanoparticle 11. This in turn causes the polymer chains to be entangled up between the nanoparticles 11, facilitating hydrophobic interactions, interactions between hydrogen bonds, etc. between the nanoparticles 11. The adjacent polymer molecules 15 are spaced away from each other to create a space that receives one end of the polymer molecule spaced away on the surface of another nanoparticle 11, thereby firmly bonding the nanoparticles 11 together.

Further, the molecules of the poor solvent 12 make a strong bonding with the hydroxyl groups on the polymer 15 so that the nanoparticles 11 can be linked together more firmly.

The hydrogen bonding of the molecules of the poor solvent 42 with the hydroxyl groups on the polymer molecules 15 also allows the surfaces of the nanoparticles 11 to be so solvophobic that the nanoparticulate fibers 30 can be highly dispersed in the poor solvent 42.

The "highly" is understood to mean that the fibers 30 are being uniformly and stably dispersed in a certain or higher concentration. Although depending on the type of the polymer 15 and so on, the "certain concentration" should be at least 0.001 mg/mL at which a given membrane filter may easily be fabricated by the filtration method.

The polymer 15 should preferably have a hydroxyl group, an amino group or a fluoro group as a substituent. For instance, use may be made of at least one polymer selected from the group consisting of polyvinyl phenol (PVPh), polyaniline (PANI), polyvinylidene fluoride (PVDF), and cellulose. Referring here to polyaniline, a part of nitrogen atoms forming that polymer is imino groups, but it will not matter if other part is present as amino groups.

Note here that although cellulose is insoluble in the solvent, its solubility may be increased by the addition of ions to it.

The polymer 15 may also be a copolymer that includes any one substituent of a hydroxyl group, an amino group or a fluoro group. The monomer including a hydroxyl group, an amino group or a fluoro group should preferably be one monomer selected from the group consisting of vinylphenol, aniline, and vinylidene fluoride.

Other monomer that forms the copolymer should preferably be at least one monomer selected from the group consisting of monomers forming polystyrene, polymethylmethacrylate, polyvinyl chloride, and polyvinylpyridine. By use of these monomers, it is possible to form alternating copolymers, random copolymers, block copolymers, and graft copolymers.

By use of the polymer or copolymer including any one substituent of a hydroxyl group, an amino group or a fluoro group, the solvent molecules of the poor solvent 42 may be incorporated in the surfaces of the nanoparticles 11 with the presence of the molecules of the poor solvent 42 between the polymer molecules 15. Then, the surface polymer chains of the nanoparticles 11 are fluctuated to enable entanglement of the polymer chains between the nanoparticles 11, thereby forming firmly linked nanoparticulate fibers.

It is here to be noted that even with common synthetic polymers such as polystyrene, polymethylmethacrylate, polyvinyl chloride, polyvinylpyridine, and polysulfone, it is possible to form the nanoparticles 11 if it is dissolved in an organic solvent and rapidly mixed with water. Of these polymers, polymethylmethacrylate, polyvinyl chloride, and polyvinylpyridine may easily yield 20 to 50 nm nanoparticles 11 upon rapid mixing with water. Polyvinylpyridine may easily yield nanoparticles 11, some of which are linked together into a fiber.

With these polymers, however, less solvent molecules are incorporated in the surfaces of the nanoparticles 11, and entanglement of polymer chains between the nanoparticles 11 is not easy. As a consequence, there are no strong interactions occurring between the nanoparticles 11, and it is not easy to form mechanically stable nanoparticulate fibers. For instance, polystyrene yields nanoparticulate fibers if N-methyl-2-pyrrolidone (NMP) is used as a good solvent; with tetrahydrofuran (THF) that is generally a good solvent for polystyrene, however, there is difficulty forming well-grown nanoparticulate fibers.

Even when nanoparticles formed by rapid mixing with water do not yield mechanically stable nanoparticulate fibers, nanoparticulate fibers may sometimes be obtained if a solvent other than water is used as the poor solvent. For instance, polyvinylidene fluoride (PVDF) is a strongly hydrophobic polymer that yields nanoparticles if it is dissolved in an organic solvent for rapid mixing with ethanol. On the other hand, ethanol that is more hydrophobic than water may exist between aggregated PVDF chains, causing fluctuations in the surface polymer chains. As a result, entanglement of polymer chains between the nanoparticles may take place, yielding robust nanoparticulate fibers through hydrophobic interactions.

Any one functional group of a pyridyl group and a carboxyl group may be used instead of the hydroxyl group, amino group or fluoro group.

When these functional groups are used, it is necessary to hold back electrostatic repulsion between the nanoparticles 11 that are the precursor for the nanoparticulate fibers by pH control or the like, thereby linking the nanoparticles 11 together into the nanoparticulate fiber 30.

It is here to be noted that the invention may have the possibility of being generalized to a wide range of polymers as the technology for forming a nanoparticulate dispersion liquid. Referring to a polysulfone or polymethacrylate as an example, it has been determined that by rapid mixing with water, it yields 20 to 50-nm nanoparticles 11. The polymer nanoparticles having these polar groups may possibly incorporate an organic solvent such as an alcohol in their surfaces, facilitating the entanglement of polymer chains between the nanoparticles 11. Although it has yet to be demonstrated that these synthetic polymers may yield mechanically stable nanoparticulate fibers, yet the possibility of obtaining nanoparticulate fibers by selection of temperatures and poor solvents in general, and control of water/alcohol mixing ratios in particular, would be easily expectable.

### (How to fabricate the nanoparticulate fiber solution)

How to fabricate the nanoparticulate fiber solution will then be explained.

The process of fabricating the nanoparticulate fiber solution - that is one embodiment of the invention - comprises the step of preparing a polymer solution and the step of adding and stirring the polymer solution into and with a poor solvent.

### (Step of preparing the polymer solution)

In the step of preparing the polymer solution, the polymer is dispersed in a good solvent to prepare the polymer solution. The polymer used herein should preferably include any one substituent of the hydroxyl group, amino group or fluoro group.

The good solvent used herein must be capable of dissolving the polymer in it, and have high dispersibility in the poor solvent. For instance, there is the mention of organic solvents such as methanol, ethanol, propanol, acetone, dioxane, acetic acid, acetonitrile, tetrahydrofuran (THF), dimethylsulfoxide (DMSO), dimethylformamide (DMF), and N-methyl-2-pyrrolidone (NMP). With these solvents, the polymer having any one substituent of the hydroxyl, amino or fluoro group may be highly dispersed in the good solvent for a short period of time.

The concentration of the polymer in the polymer solution should preferably be from 0.05 mg/mL to 5 mg/mL inclusive for the purpose of highly dispersing the polymer solution in the poor solvent for a short period of time. Concentrations of less than 0.05 mg/mL will not allow a sufficient amount of nanoparticles to be formed because the polymer concentration is too low, and concentrations of more than 5 mg/mL will result in precipitation or the like because the polymer concentration is too high.

### (Step of adding and stirring the polymer solution into and with the poor solvent)

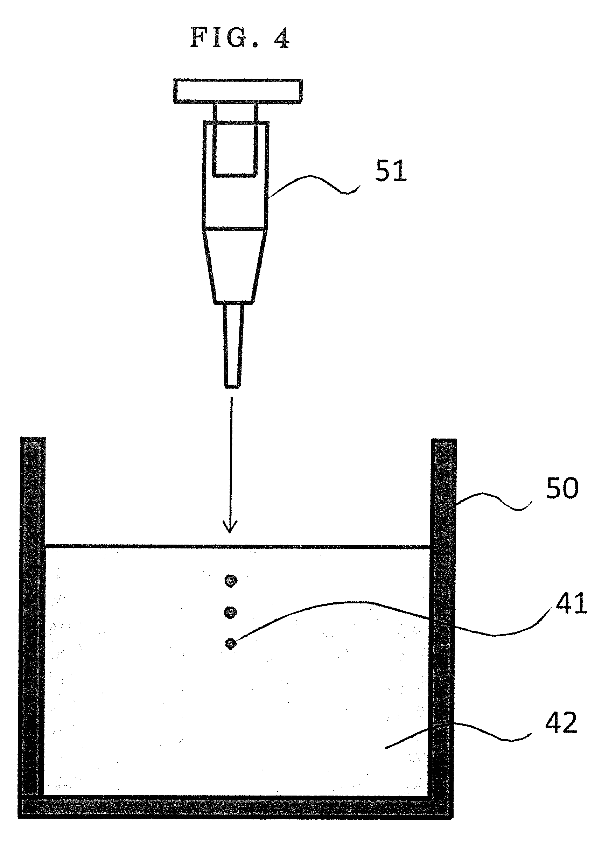

Fig. 4 is a process diagram illustrative of one example of the process of fabricating the nanoparticulate fiber solution according to the invention.

As shown in Fig. 4, the polymer solution 41 should preferably be added into the poor solvent 42 from an injector by way of a nozzle or the like, thereby making sure the polymer solution 41 is immediately dispersed in the poor solvent 42 and local concentrations are made uniform.

In dispersing the polymer solution 41 in the poor solvent 42, the mixed solution should preferably be stirred because the polymer solution 41 can be dispersed in the poor solvent 42 for a shorter period of time.

As the polymer solution 41 is rapidly mixed with the poor solvent 42, it will cause the molecules of the poor solvent 42 to penetrate between the polymer side chains in the poor solvent 42 and the polymer molecules to be entangled up with one another, resulting in hydrogen bonding of the molecules of the poor solvent with the hydroxyl or amino groups on the polymer molecules and, hence, yielding strongly aggregated nanoparticles.

The molecule of the poor solvent 42 incorporated between the surface polymer molecules of each nanoparticle 11 will form a space with the adjacent polymer molecule, in which the surface polymer molecule of the adjacent nanoparticle 11 will then be drawn, resulting in the entanglement of the polymer molecules of the adjacent nanoparticles and the hydrogen bonding of the hydroxyl or amino groups on the respective polymer molecules with the molecules of the poor solvent 42. This will then firmly link the nanoparticles 11 together into a nanoparticulate fiber having high mechanical strength and a size of 1 nanometer to 100 nanometers.

When the polymer includes the fluoro group, the poor solvent will be incorporated in the nanoparticle 11 by way of hydrophobic interaction while it keeps its own structure.

There is no special limitation on how to mix, and mixing may be carried out at room temperature as well.

The mixing time should preferably be within a few seconds although depending on the polymer concentration. This is because longer mixing times will give rise to a lowering of the dispersibility of nanoparticulate fibers.

The concentration of the polymer in the nanoparticulate fiber solution, viz., the concentration of the polymer in the poor solvent 42 after mixing should preferably range from 0.002 mg/mL to 0.2 mg/mL. While the polymer solution is very dilute in this concentration range, that concentration range is well fit for the process of fabricating a membrane filter that is a main application of the invention, wherein the nanoparticulate fiber solution 40 is filtered through a porous sheet to fabricate a filter cake having networked nanoparticles 11.

### (Nanoparticulate fiber membrane filter)

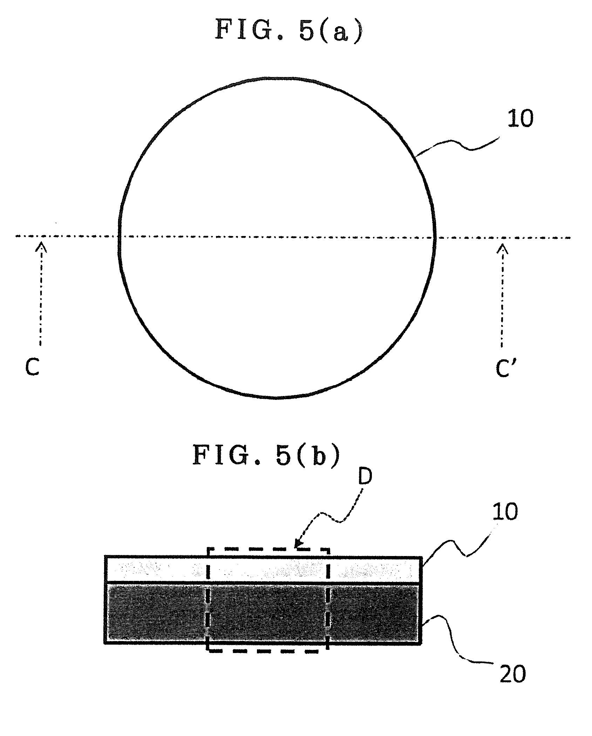

Fig. 5(a) is a schematic plan view of one example of the nanoparticulate fiber membrane filter according to the invention.

As shown in Fig. 5(a), the nanoparticulate fiber membrane filter 10 that is one embodiment of the invention is in a substantially circular form, by way of example alone, as viewed on a plane: that membrane filter 10 may be in other form like a substantially rectangular or polygonal form as viewed on a plane.

Fig. 5(b) is a sectional view of Fig. 5(a) taken on C-C' line.

As shown in Fig. 5(b), the nanoparticulate fiber membrane filter 10 is formed in such a way as to cover one surface of the filter 20.

However, the nanoparticulate fiber membrane filter 10 is not limited to the type laminated on the filter: it may be configured as a single-layer membrane or a multilayered membrane.

By filtering the nanoparticulate fiber solution 40 through the filter 20, the nanoparticulate fiber membrane filter 10 (that may be called the sheet filter cake, or unwoven fabric or filtration membrane) may be formed on the filter 20.

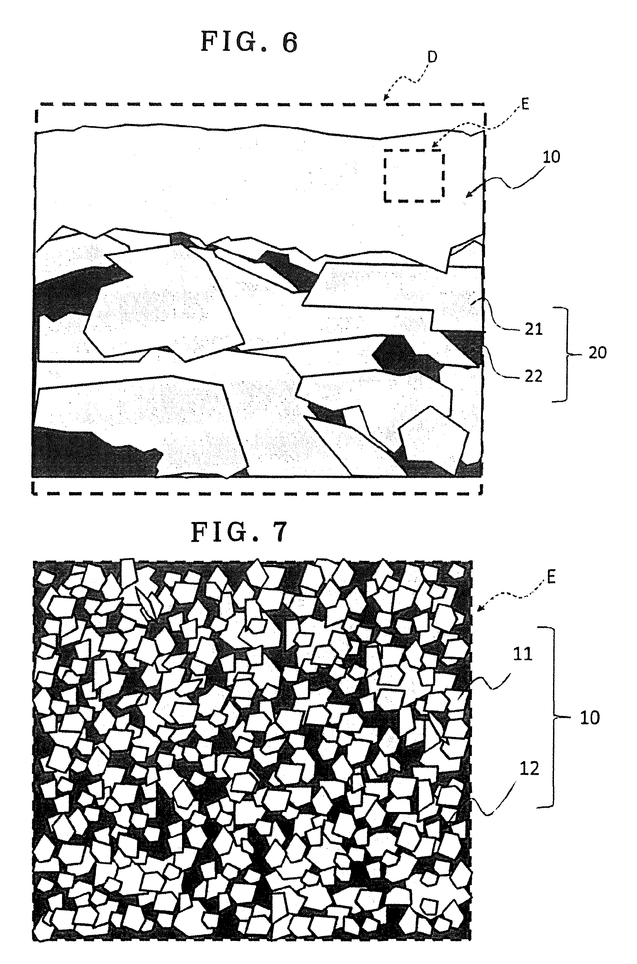

Fig. 6 is an enlarged schematic view of an area D of Fig. 5(b).

As shown in Fig. 6, the filter 20 is built up of a plurality of base substance parts 21 and openings 22 provided between adjacent base substance parts 21.

Even with the filter 20 having pores of a few micrometers in diameter, the filter membrane may be formed in such a way as to cover the openings 22 if the nanoparticulate fibers 30 are used, because each nanoparticulate fiber 30 has a network configuration having an expansion of about 10 micrometers, in which that expansion may be maintained by interactions resulting from the entanglement of polymer chains, resulting in less penetration into the openings 22.

The filter 20 used herein may be a cellulose acetate (CA) filter, a polytetrafluoroethylene (PTFE) filter, a polycarbonate (PC) filter or the like.

The nanoparticulate fiber membrane filter 10 may have a thickness less than that of the filter 20. In the invention, the membrane filter 10 should have a thickness of 50 nanometers to 1,000 nanometers inclusive, preferably 100 nanometers to 500 nanometers inclusive. The nanoparticulate fiber membrane filter 10, because of having high mechanical strength, may maintain a stable membrane even when having a thickness of less than 500 nanometers. This will make fast penetration of liquid possible.

As shown in Fig. 7, the nanoparticulate fiber membrane filter 10 is formed by the aggregation of the nanoparticles 11, with pores 12 provided between the nanoparticles 11. The nanoparticles 11 have a diameter of 1 nanometer to 100 nanometers inclusive, preferably 10 nanometers to 50 nanometers inclusive. The pores 12 each have a diameter of 1 nanometer to 100 nanometers inclusive, providing a narrow pore distribution. Those pores 12 allow the membrane filter 10 to be used for filtration of substances having any diameter ranging from 1 nanometer to 100 nanometers inclusive.

In the filter of nanoparticle 11, the nanoparticulate fiber having firmly linked nanoparticles 11 is further aggregated so much so that the nanoparticulate fiber membrane filter 10 can be formed as a very firm membrane.

In the nanoparticulate fiber membrane filter 10, the polymer may be cured after its formation. For instance, a compound including an alkoxide, methylol or isocyan group may be used to cure polyvinyl phenol as by heating or irradiation with ultraviolet thereby obtaining a durable membrane filter.

The nanoparticulate fiber membrane filter 10 may also be treated in such a way as to contain a molecule having low vapor pressure. For instance, that membrane filter 10 may be dipped in a liquid composed of molecules having low vapor pressure.

The "molecules having low vapor pressure" used herein is understood to refer to those having a vapor pressure of 10 mmHg or lower at room temperature, typically glycerol, ethylene glycol, and polyethylene oxide molecules that penetrate easily into the nanoparticulate fiber membrane filter to prevent its degradation due to drying or the like and keep its performance stable.

The nanoparticulate fiber solution 40 that is one embodiment of the invention comprises the nanoparticulate fibers 30 dispersed in the poor solvent 42. Each or the nanoparticulate fiber 30 comprises the elongated segment 31 where a plurality of nanoparticles 11 are linked together and elongated out, and a branching segment where the elongated segment 32 is branched off. Each or the nanoparticle 11 comprises the polymer 15 including any one substituent of a hydroxyl group, an amino group or a fluoro group and the molecules of the poor solvent 42, wherein the polymer molecules 15 are entangled up and aggregated with the molecule of the poor solvent 42 held between the polymer molecules 15. It is thus possible to highly disperse the nanoparticulate fibers 30 without undergoing gelation and precipitation.

The nanoparticulate fiber solution 40 that is one embodiment of the invention, because the poor solvent 42 is water or an alcohol, can easily be prepared, and makes sure the nanoparticulate fibers 30 have higher mechanical strength.

In the nanoparticulate fiber solution 40 that is one embodiment of the invention, the molecules of the poor solvent 42 form hydrogen bonds with the hydroxyl or amino groups or interact hydrophobically with other groups than the fluoro groups. It is thus possible to fluctuate the polymer chains thereby making the entanglement of polymer chains between the nanoparticles possible, and make linkages between the nanoparticles 11 so firmer that the mechanical strength of the nanoparticulate fibers 30 can be brought up.

In the nanoparticulate fiber solution 40 that is one embodiment of the invention, the polymer 15 is at least one polymer selected from the group consisting of polyvinyl phenol (PVPh), polyaniline (PANI), polyvinylidene fluoride (PVDF), cellulose, and polystyrene. It is thus possible to easily form a solution in which the nanoparticulate fibers 30 comprising the linked nanoparticles 11 are highly dispersed without undergoing gelation and precipitation. For instance, PVPh is a synthetic polymer including a plurality of hydroxyl groups derived from the phenol site; so it may be highly dispersed in water used as the poor solvent.

In the nanoparticulate fiber solution 40 that is one embodiment of the invention, the polymer 15 is a copolymer including any one substituent of the hydroxyl, amino or fluoro group. It is thus possible to easily form a solution in which the nanoparticulate fibers 30 comprising the linked nanoparticles 11 are highly dispersed without undergoing gelation and precipitation.

The process of fabricating the nanoparticulate fiber solution 40 that is one embodiment of the invention comprises the step of dispersing the polymer including any one substituent of the hydroxyl, amino or fluoro group in the good solvent to prepare a polymer solution, and the step of adding and stirring the polymer solution into and with the poor solvent 42. According to this process, the nanoparticles of 1 nanometer to 100 nanometers inclusive can first be formed from a dilute solution, and the nanoparticles 11 are then linked together into the nanoparticulate fibers 30. It is thus possible to easily fabricate the nanoparticulate fiber solution 40 in which the nanoparticulate fibers 30 are highly dispersed without undergoing gelation and precipitation.

With the process of fabricating the nanoparticulate fiber solution 40 that is one embodiment of the invention, it is possible to highly disperse the polymer in the good solvent 15 for a short period of time because the good solvent is an organic solvent.

With the process of fabricating the nanoparticulate fiber solution 40 that is one embodiment of the invention, it is possible to highly disperse the polymer 15 in the poor solvent for a short period of time because the concentration of the polymer 15 in the aforesaid polymer solution is set at 0.05 mg/mL to 5 mg/mL inclusive.

With the process of fabricating the nanoparticulate fiber solution 40 that is one embodiment of the invention, it is possible to easily fabricate the nanoparticulate fiber solution 40 in which the nanoparticulate fibers 30 are highly dispersed without undergoing gelation and precipitation, because the concentration of the polymer 15 in the nanoparticulate fiber solution 40 is set at 0.002 mg/mL to 0.2 mg/mL inclusive.

The nanoparticulate fiber membrane filter 10 that is one embodiment of the invention is formed by the aggregation of the nanoparticulate fibers 30 into a membrane shape. It is thus possible to bring up its mechanical strength and reduce its thickness. Even with the membrane filter 10 formed over the filter 20, it is possible to reduce a lowering of flux without causing the polymer solution to penetrate deep into the filter 20. If the membrane filter 10 is designed to have the pores 12 of 1 nanometer to 100 nanometers inclusive in diameter, it is then possible to separate off a given substance of 1 nanometer to 100 nanometers inclusive in diameter. The membrane filter 10 is better in mechanical strength and, hence, handleability than a conventional regenerated cellulose composite membrane.

The nanoparticulate fiber membrane filter 10 that is one embodiment of the invention has the pores 12 of 1 nanometer to 100 nanometers inclusive in diameter. If the pores 12 are allowed to have a given diameter, it is then possible to separate off nanoparticles of 1 nanometer to 100 nanometers inclusive at high removal (rejection) rates. Even at very increased fluxes, it is possible to remove nanoparticles of less than 5 nanometers at a removal rate of greater than 90%.

The nanoparticulate fiber membrane filter 10 that is one embodiment of the invention, because of including the molecules having low vapor pressure, can be kept stable and protected against degradation due to drying or the like.

In the nanoparticulate fiber membrane filter 10 that is one embodiment of the invention, the molecule having low vapor pressure is any one molecule selected from the group consisting of glycerol, ethylene glycol, and polyethylene oxide. It is thus possible to easily penetrate the substance to be penetrated into the nanoparticulate fiber membrane filter thereby keeping it stable and protect it against degradation due to drying or the like.

The membrane filter just after fabrication may include some good solvent attributable to a weak junction between the nanoparticles. However, if that membrane filter is treated with hot water as exemplified in Example 4 given later, it is then possible to remove the good solvent entering between the nanoparticles, resulting in improvements in the strength of the membrane filter.

The nanoparticulate fiber solution and its fabrication process as well as the nanoparticulate fiber membrane filter, all being specific embodiments of the invention, are not limited to what has been described hereinbefore; they may be modified in various ways within the scope of the technical concept of the invention. Embodiments of the invention will now be explained with reference to a number of examples; however, the invention is not limited to them.

### EXAMPLES

### (Example 1)

Four (4) mL of a solution of 0.5 mg/mL of polyvinyl phenol (having a molecular weight of 25,000, PVPh) in ethanol were vigorously stirred in and mixed with 96 mL of water, and then allowed to stand alone for 5 minutes at room temperature.

This solution was transparent and could be stored for over 2 weeks at room temperature.

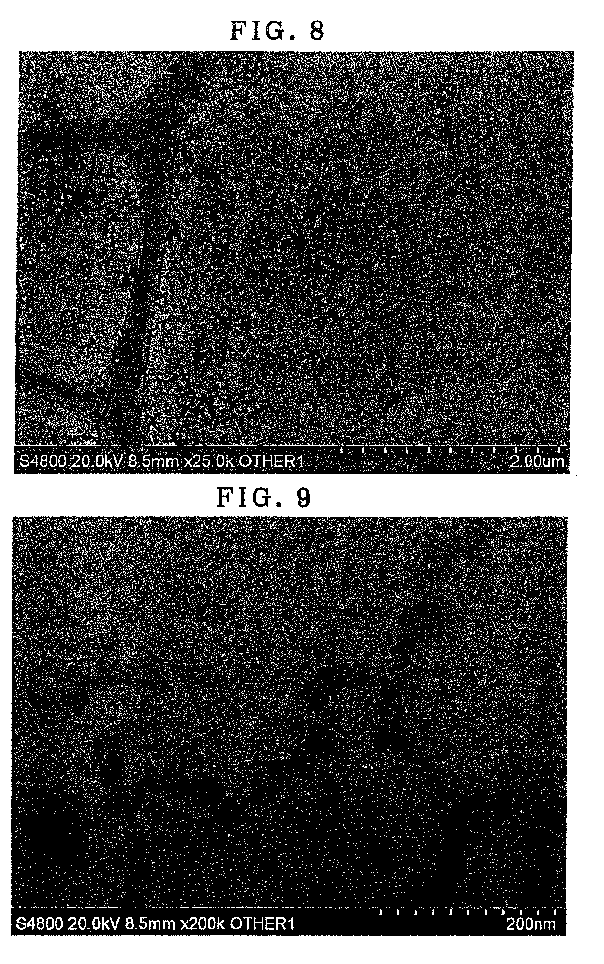

Observation of the solution under a scanning transmission electron microscope (STEM) revealed that nanoparticulate fibers comprising about 20-nm linked nanoparticles were formed in the solution (see Figs. 8 and 9) .

Then, 5 mL of the solution having the nanoparticulate fibers formed in it were filtered using a cellulose acetate (CA) filter having an effective area of 2.27 cm².

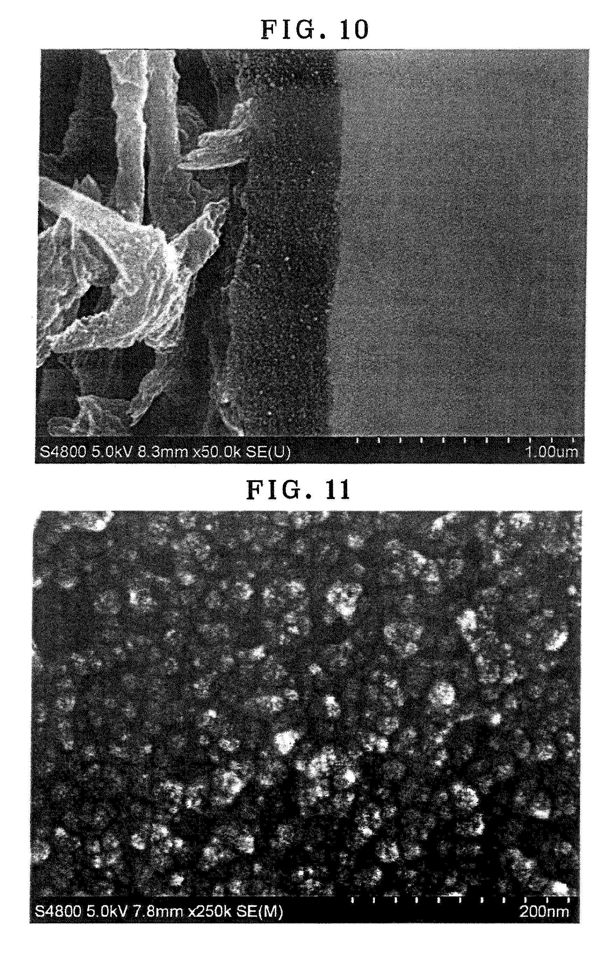

A scanning transmission electron microscope (SEM) image in section of the thus formed filtration membrane is attached hereto as Fig. 10. As can be seen from Fig. 10, an about 360-nm thick membrane was formed on the surface of the cellulose acetate filter.

An SEM image taken of the surface of the filtration membrane is attached hereto as Fig. 11. As can be seen from Fig. 11, this membrane has a nanoparticle form. Having a pore diameter of 200 nanometers, the CA filter is provided in its surface of a number of openings of a few micrometers in diameter. A membrane comprising about 20-nm nanoparticles could be formed on the surface of the filter having such large openings for the reasons that the nanoparticles are linked together into a fiber that does not enter into the CA filter due to its mechanical stability.

In Example 1, experiments were further carried out using the aforesaid nanoparticulate fiber solutions in filtration or feed amounts of 4 mL, 6 mL, 7 mL and 8 mL.

The results are tabulated in Table 1.

Set out in Table 1 are the thickness of the filtration membrane prepared in Example 1, the amounts of the solutions penetrating through the membrane filter, and the maximum pore diameter.

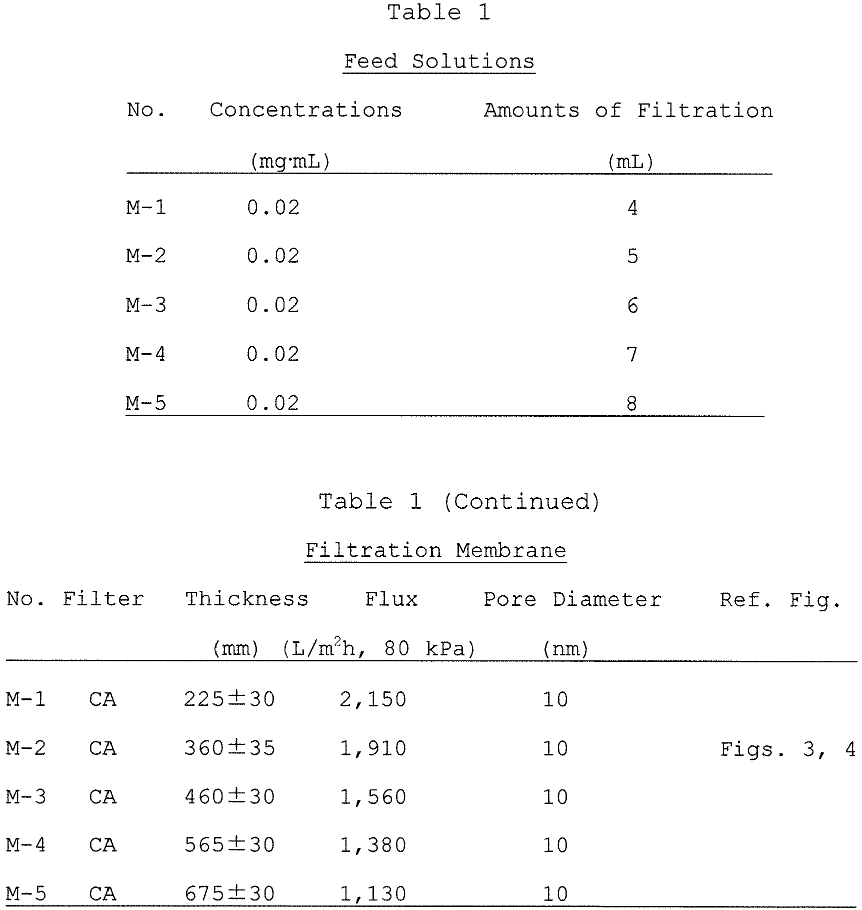

The filtration membrane had a thickness proportional to the amount of filtration, increasing from 255 nanometers to 675 nanometers.

The membrane filter comprising the CA filter including the nanoparticulate fiber filtration membrane was estimated to have a filter performance ranging from 1,130 L/m²h to 2,150 L/m²h upon filtration under a reduced pressure of 80 kPa. These membranes could filter gold nanoparticles of 10 nanometers in diameter off from its aqueous solution. For this reason, the membrane filter would have a pore diameter of less than 10 nanometers.

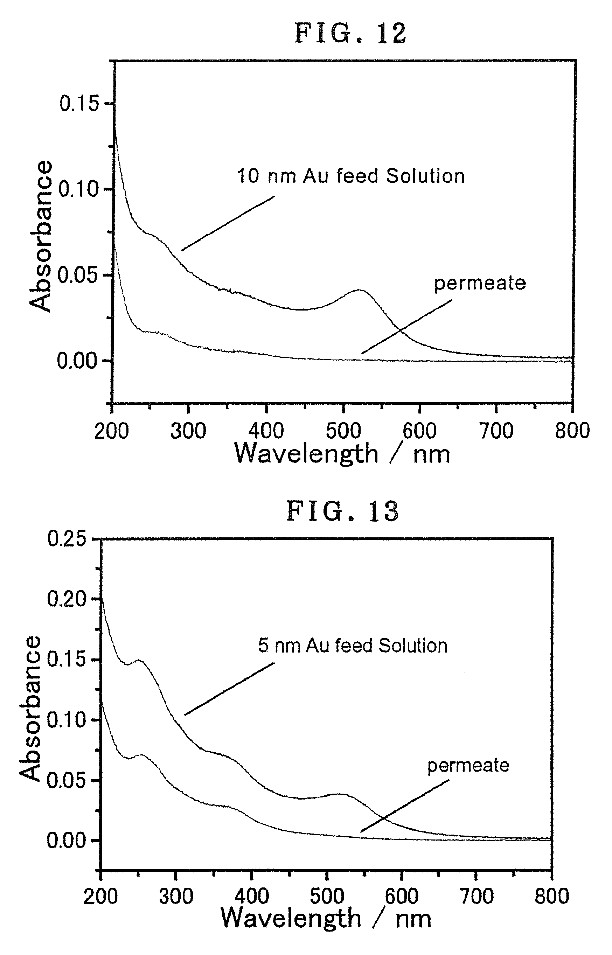

Fig. 12 is indicative of the ultraviolet and visible absorption spectra of a feed solution or an aqueous solution of 10-nm gold nanoparticles and a permeate or an aqueous solution after filtration through Membrane M-2 in Table 1. From the fact that a peak near a 520-nm wavelength disappeared, it is found that more than 99% nanoparticles were removed.

From the results, plotted in Fig. 13, of similar experimentation using 5-nm gold nanoparticles, it has been confirmed that the removal rate for nanoparticles is 90%.

Further filtration experimentation was carried out with Membrane M-1 in Table 1, and the results are summed up in Table 2.

Set out in Table 2 are the filtration performances of the membrane filters prepared in Example 1.

The rejection rates for 5-nm and 10-nm gold nanoparticles were 73% and 94%, respectively.

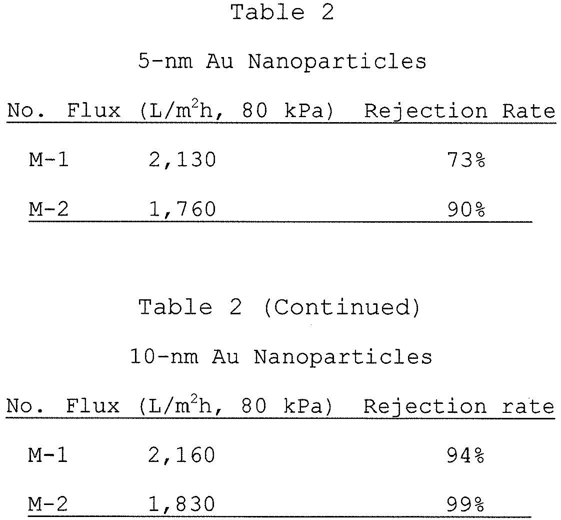

The nanoparticulate fibers could be formed in a membrane form just only on the CA filter but also on a PTFE (polytetrafluoroethylene) or PC (polycarbonate) filters having a pore diameter of 200 nanometers.

### (Example 2)

One (1) mL of a solution of 0.5 mg/mL of polyaniline (having a molecular weight of 65,000, PANI) in N-methyl-2-pyrrolidone was first mixed with 99 mL of water, and then let stand alone for 30 minutes at room temperature.

This solution is transparent, and can be stored for over one week at room temperature.

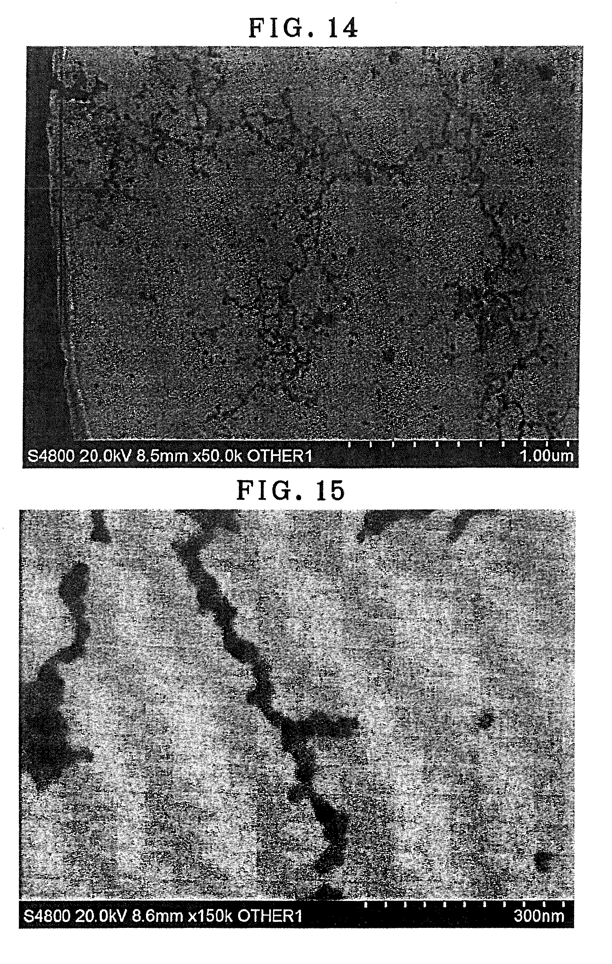

Observation of the solution under a scanning transmission electron microscope (STEM) revealed that nanoparticulate fibers comprising about 20-nm linked nanoparticles were formed in it (see Figs. 14 and 15).

Then, 20 mL of the solution having the nanoparticulate fibers formed in it were filtered using a polycarbonate (PC) filter having an effective area of 2.27 cm².

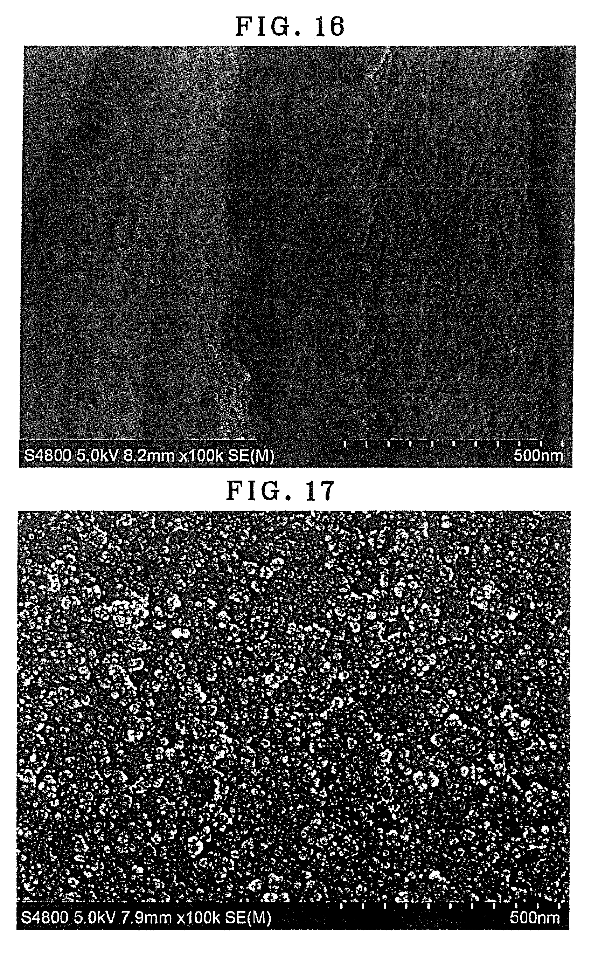

An SEM image in section of the thus formed filtration membrane is attached hereto as Fig. 16. As can be seen from Fig. 16, an about 170-nm thick membrane was formed on the surface of the PC filter having pores of 0.2 µm in diameter. In Fig. 16, a part of the filtration membrane comes off because the PC filter is cut for sectional observation.

An SEM image taken of the surface of the filtration membrane is attached hereto as Fig. 17. As can be seen from Fig. 17, this membrane has a nanoparticle form. A membrane comprising about 20-nm nanoparticles could be formed on the surface of the PC filter having 0.2-µm openings for the reasons that the nanoparticles are linked together into a fiber that does not enter into the PC filter due to its mechanical stability, as is the case with PVPh.

The membrane filter comprising the PC filter including the nanoparticulate fiber filtration membrane was estimated to have a water flux of 1,500 L/m²h upon filtration under a reduced pressure of 80 kPa. This membrane could filter gold nanoparticles of 10 nanometers in diameter off from its aqueous solution. For this reason, the membrane filter would have a pore diameter of less than 10 nanometers.

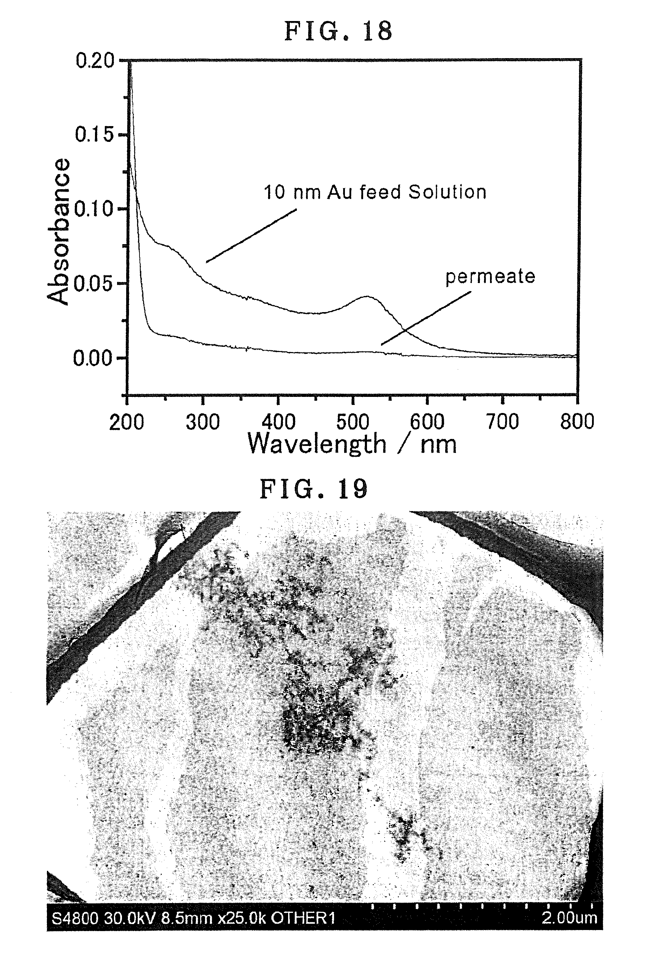

Fig. 18 is indicative of the ultraviolet and visible absorption spectra of a feed solution or an aqueous solution of 10-nm gold nanoparticles and a permeate or an aqueous solution after filtration through membrane filter prepared in Example 2. From the fact that a peak near a 520-nm wavelength disappeared, it is found that more than 90% nanoparticles were removed.

### (Example 3)

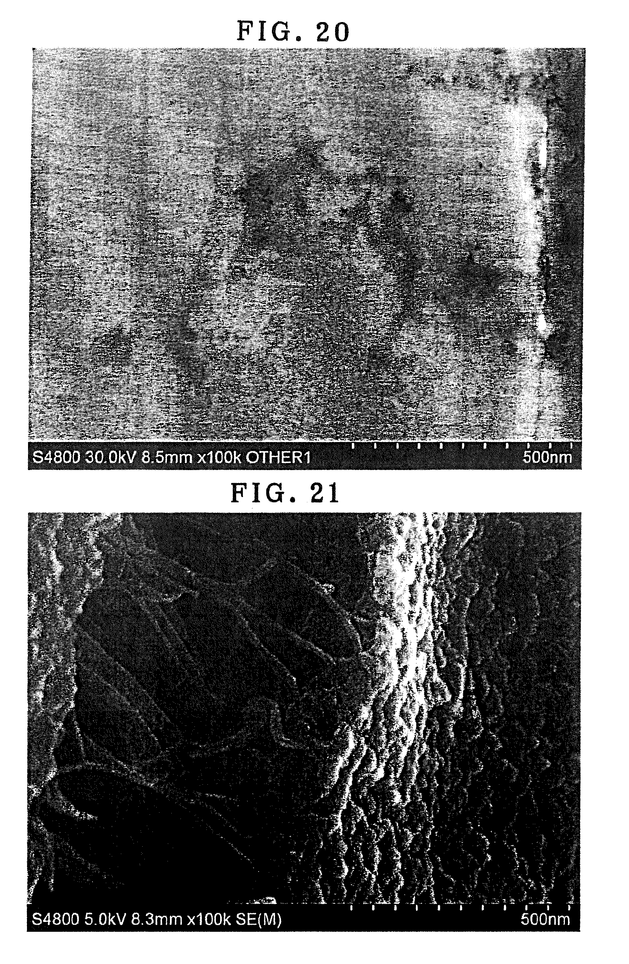

One (1) mL of 1 mg/mL of polyvinylidene fluoride (having a molecular weight of 180,000 as measured by GPC, PVDF) in N-methyl-2-pyrrolidone (NMP) was mixed under agitation with 19 mL of ethanol, and let stand alone for a further 5 minutes at room temperature. Here a trace amount of ethanol was added to make up for any decrease in solvent volume due to mixing and to make the volume 20 mL. The ensuing solution is transparent, and can be stored for over two weeks at room temperature. Observation of the solution under a scanning transmission electron microscope (STEM) revealed that nanoparticulate fibers comprising about 25 to 30-nm linked nanoparticles were formed in it (Figs. 19 and 20). Thanks to the tendency of PVDF to break down by electron beams, however, it was difficult to take such a high-resolution image of nanofibers as shown in Example 1.

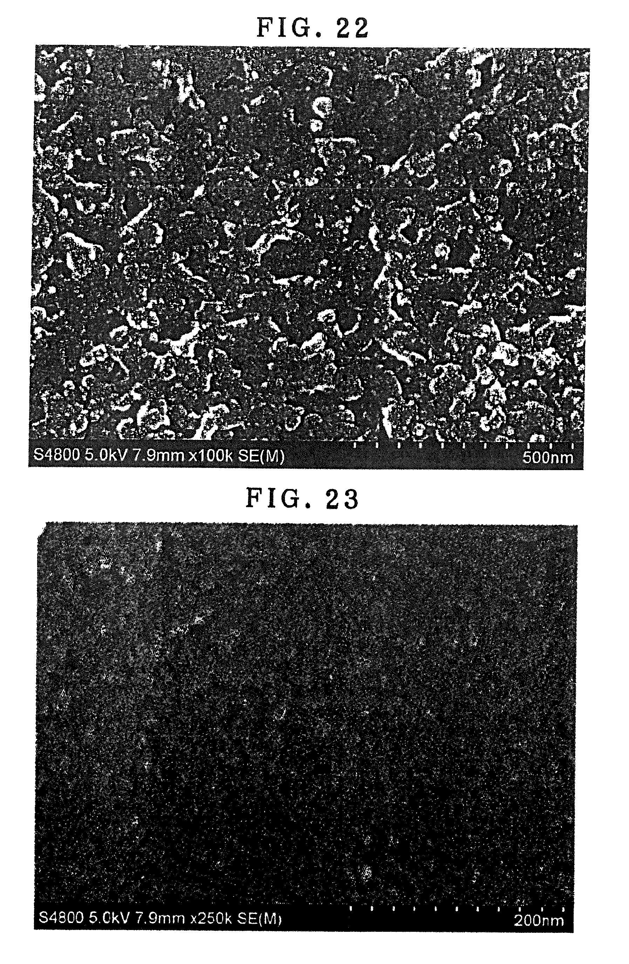

Then, 2 mL of the solution having the nanoparticulate fibers formed in it were filtered using a polytetrafluoroethylene (PTFE) filter having an effective area of 2.27 cm² (and having a pore diameter of 200 nanometers). A scanning electron microscope (SEM) image in section of the thus formed filtration membrane is attached hereto as Fig. 21, and an SEM image of the surface of the filtration membrane is attached hereto as Fig. 22. As can be seen from Fig. 21, an about 200-nm thick membrane was formed on the surface of the PTFE filter.

As can be seen from Fig. 22, this membrane has a nanoparticle form. Although the structure of nanoparticles remained unclear from observation under a scanning transmission electron microscope (STEM) (Fig. 20), it was found from observation under a scanning electron microscope (Fig. 22) that the decomposition of PVDF was prevented and there was a distinct nanoparticle structure obtained, because 2-nm thick platinum was deposited by evaporation. Having a pore diameter of 200 nanometers, the PTFE filter is provided in its surface with a number of openings of a few micrometers in diameter. A membrane comprising about 25 to 30-nm nanoparticles could be formed on the surface of the filter having such large openings for the reasons that the nanoparticles are linked together into a fiber that has mechanical stability.

From the section of the filtration membrane of Fig. 21, it is also seen that the fibrous PVDF is stretched. This fiber is formed as a result of the nanoparticulate fiber having being stretched during the preparation of the sample for SEM observation. This also indicates that the membrane filter comprises the nanoparticulate fibers, viz., the nanoparticulate fibers each comprising an elongated segment where a plurality of nanoparticles are linked together and elongated, and a branching segment wherein the elongated segment is branched off. As can be seen from Fig. 21, it is also found that the filtration membrane hardly enters into the PTFE filter.

Set out in Table 3 is the filtration performance of the membrane filter prepared in Example 3.

Membrane filter M-6 in Table 3 is made up of the PTFE filter provided on its surface with the nanoparticulate fiber membrane of PVDF, and Membrane filter M-7 is made up of the PTFE filter provided on its surface with the PVDF nanoparticulate fiber membrane (Membrane filter M-6) that was further let stand alone for 3 days at room temperature after a 10% glycerol aqueous solution penetrated through it. The penetration of that glycerol aqueous solution (1 mL) was carried out under a reduced pressure of 80 kPa.

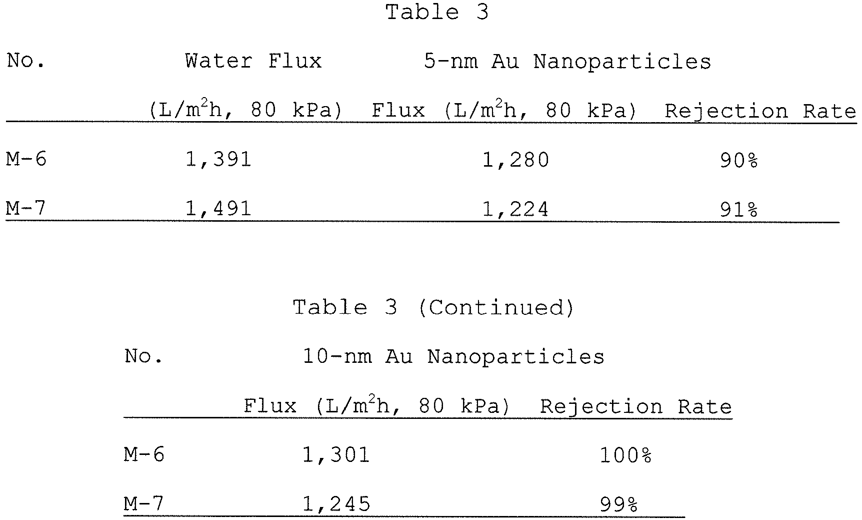

Membrane filter M-6 in Table 3 was estimated to have a water penetration rate of 1,391 L/m²h upon filtration under a reduced pressure of 80 kPa. As estimated as in Example 1, the rejection rate for gold nanoparticles of 10 nanometers in diameter was 100%, with a flux of 1,301 L/m²h (under a reduced pressure of 80 kPa). The rejection rate for gold nanoparticles of 5 nanometers in diameter goes a bit down to 90%. The flux was 1,280 L/m²h (under a reduced pressure of 80 kPa).

Membrane filter M-7 in Table 3 was estimated to have a water penetration rate of 1,491 L/m²h upon filtration under a reduced pressure of 80 kPa. The rejection rates for gold nanoparticles of 10 nanometers and 5 nanometers in diameter were 99% and 91%, respectively, and the fluxes of the nanoparticle aqueous solution were 1,245 L/m²h and 1,224 L/m²h, respectively.

The PVDF membrane just after preparation (Membrane filter M-6 in Table 3) has a high rejection rate for nanoparticles and high water penetration. Upon stored under dry conditions, however, some of the pores in the membrane filter are clogged up, resulting in a lowering of fluxes. This problem could be solved by treating the membrane filter with glycerol (Membrane filter M-7 in Table 3): the membrane filter could be stored over an extended period of time.

### (Example 4)

To bring up the mechanical strength of the filtration membrane, some thermal treatments were herein carried out.

First, 2 mL of the solution prepared in Example 3 with nanoparticulate fibers of PVDF formed in it were filtered using a cellulose acetate (CA) filter having an effective area of 2.27 cm² (and a pore diameter of 200 nanometers), followed by washing with ethanol and water.

The following treatments A to D were applied to the filtration membrane prepared as described above. The results are set out in Table 4.

### (Treatment A)

In Treatment A, the filtration membrane filter was dipped in 100°C water in an autoclave for 10 minutes.

### (Treatment B)

In Treatment B, the filtration membrane was dipped in glycerin heated to 100°C for 10 minutes.

### (Treatment C)

In Treatment C, the filtration membrane was dipped in 100°C water in an autoclave for 22 hours.

### (Treatment D)

In Treatment D, the filtration membrane was dipped in 100°C water in an autoclave for 42 hours.

**Table 4**

| | | | Thermal Treatment | | Fluxes of Water |
|---|---|---|---|---|---|
| No. | Polymer | Substrate | Conditions | Times | |
| | | | | | (L/m²h, 80 kPa) |
| M-8 | PVDF | CA | Dipped in 100°C water | 10 min. | 1,410 |
| M-9 | PVDF | CA | Dipped in 100°C glycerin | 10 min. | 1,480 |
| M-10 | PVDF | CA | Dipped in 100°C water | 22 hr. | 945 |
| M-11 | PVDF | CA | Dipped in 100°C water | 42 hr. | 750 |

Of Membranes M-8 to M-11 in Table 4, the strengths and water penetration rates were estimated. In Treatment A (M-8), the 10-minute hot-water treatment contributed to some considerable improvements in the strength of the PVDF layer in the membrane filter so much so that there was no peeling of PVDF occurring even with the surface of the membrane filter rubbed up with the a fingertip. In this case, the flux of water was 1,410 L/m²h upon filtration under a reduced pressure of 80 kPa. In Treatment B (M-9), too, similar mechanical strength was determined. In Treatments C (M-10) and D (M-11), on the other hand, longer hot-water treatment times resulted in a lowering of water flux through the membrane filter after treatment. This example showed that only about 10-minute hot-water treatment is needed for improvements in the strength of the PVDF layer in the membrane filter.

### (Example 5)

In the instant example, a membrane filter was prepared from a plurality of nanoparticulate fibers. If specific nanoparticulate fibers are excluded, such a membrane filter then makes sure a larger flux.

First, 4 mL of 0.5 mg/mL of polyvinyl phenol (having a molecular weight of 25,000, PVPh) in ethanol were mixed under vigorous agitation with 96 mL of water according to the method of Example 1 to prepare a solution containing nanoparticulate fibers of PVPh, herein called Solution a.

Then, according to the method of Example 3, 1 mL of a solution of 1 mg/1mL of polyvinylidene fluoride (having a molecular weight of 180,000 as measured by GPC, PVDF) in N-methyl-2-pyrrolidone (NMP) was mixed under agitation with 19 mL of ethanol to prepare a solution containing nanoparticulate fibers of PVDF, hereinafter called Solution b.

Solutions a and b were mixed together, each in an amount of 10 mL, and let stand alone for 5 minutes to prepare a solution, hereinafter called Solution c.

Two (2) mL of Solution c containing nanoparticulate fibers of PVPh and PVDF were filtered through a cellulose acetate (CA) filter having an effective area of 2.27 cm² to form a membrane filter comprising two polymers.

The following two treatment steps were applied to the membrane filter formed as described above. The results are set out in Table 5.

### (Step A)

In Step A, 20 mL of ethanol were filtered through the above membrane filter thereby removing PVPh in the membrane filter, which was then dipped in boiling water for 10 minutes for thermal treatment.

### (Step B)

In Step B, the membrane filter was dipped in boiling water for 10 minutes for thermal treatment, and 20 mL of ethanol were then filtered through the membrane filter thereby removing PVPh in the membrane filter.

**Table 5**

| No. | Fluxes of Water (L/m²h, 80 kPa) | 20-nm Au Nano-particles Rejection Rate | 40-nm Au Nano-particles Rejection Rate |
|---|---|---|---|
| M-12 | 3,270 | 9.8% | 98.2% |
| M-13 | 3,620 | | 99.3% |

The CA filter of Example 5 having the nanoparticulate fiber membrane of PVPh and PVDF formed on it was treated in Step A into a CA filter having 20 to 40-nm nanopores in its surface (Membrane M-12 in Table 5), which was estimated to have a water penetration rate of 3,270 L/m²h upon filtration under a reduced pressure of 80 kPa. The rejection rate was 9.8% for gold nanoparticles of 20 nanometers in diameter, and 98.2% for gold nanoparticles of 40 nanometers in diameter. A CA filter pack having similar nanopores was also obtained in Step B. This CA filter (Membrane M-13 in Table 5) had a water penetration rate of as large as 3,620 L/m²h upon filtration under a reduced pressure of 80 kPa, and a rejection rate of 99.3% for gold nanoparticles of 40 nanometers in diameter.

### (Example 6)

Prepared was a dimethylacetamide solution containing 5.6 wt% of cellulose and 10 wt% of lithium chloride. This solution was diluted with dimethylacetamide (DMAc) thereby preparing 0.5 mg/mL of a cellulose solution. Then, 0.2 mL of this cellulose solution was diluted in 8 mL of DMAc (or 9 mL of N-methylpyrrolidone), and 1 to 4 mL of the poor solvent were added under agitation to it. In this example, water, 0.1 M/L NaCl aqueous solution, ethanol, and methanol was used as the poor solvent. After the addition of the poor solvent, agitation was carried out for 5 minutes to obtain a transparent dispersion liquid containing nanoparticulate fibers of cellulose.

About 1 mL of the above transparent dispersion liquid (containing 0.01 mg of cellulose) was filtered through a polytetrafluoroethylene (PTFE) filter having an effective area of 2.27 cm² (and a pore diameter of 200 nanometers), and then washed under the flows of ethanol and water. An SEM image of the surface of the thus formed filtration membrane is attached hereto as Fig. 23. Obviously, this membrane has a nanoparticle form. The PTFE filter has a pore diameter of 200 nanometers, and a membrane of about 15-nm nanoparticles can be formed on those pores for the reason that the nanoparticles are linked together into fibers having mechanical stability.

Summed up in Table 6 are the performances as membrane filters of the filtration membranes prepared using some combinations of the good and poor solvents.

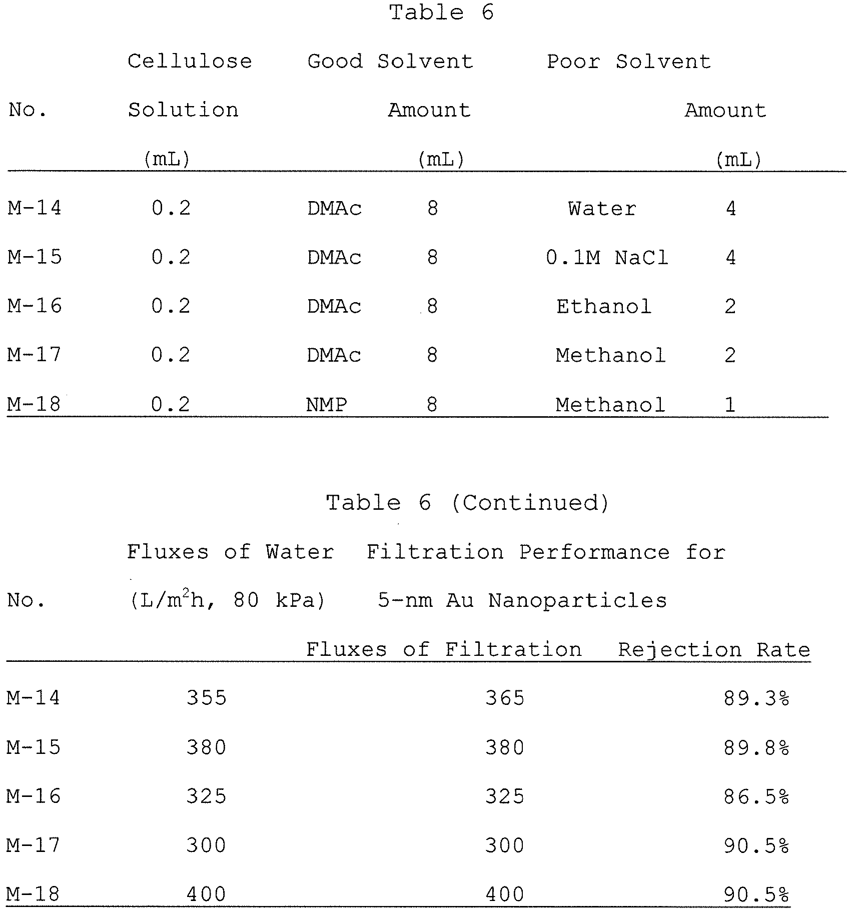

The membrane filters (M-14 to M-18 in Table 6) obtained out of the nanoparticulate fibers of cellulose had a water flux ranging from 300 L/m²h to 400 L/m²h under a reduced pressure of 80 kPa and a rejection rate ranging from 86.5% to 90.5% for 5-nm gold nanoparticles. The membrane shown in Fig. 23 corresponds to M-17.

### (Example 7)

First, 0.2 mL of 2 mg/mL of polystyrene (having a molecular weight of 480,000 as measured by GPC, PS) in N-methyl-2-pyrrolidone (NMP) was mixed under agitation with 19.8 mL of ethanol, and the resultant solution was then agitated at room temperature for a further 5 minutes. The ensuing solution was transparent. The expanse of nanoparticulate fibers of PS measured and estimated by DLS was about twice as large as that of nanoparticulate fibers of PVDF in Example 3.

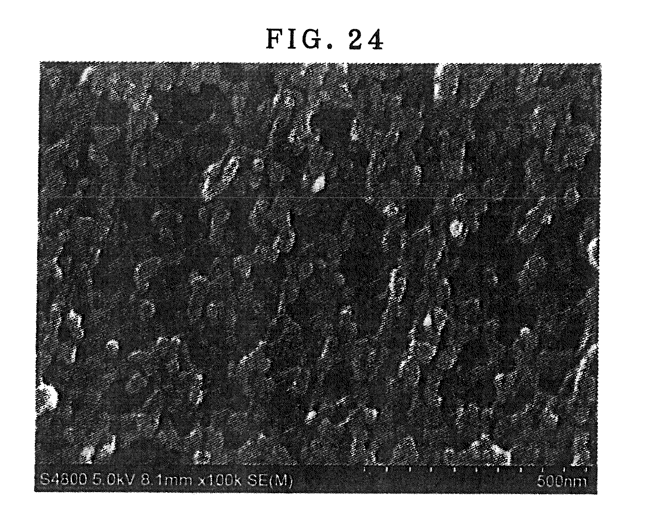

About 5 mL of the above transparent solution were filtered through a polycarbonate (PC) filter having an effective area of 2.27 cm² (and a pore diameter of 200 nanometers), and then washed under the flows of ethanol and water. An SEM image of the surface of the thus formed filtration membrane is attached hereto as Fig. 24. Obviously, this membrane has a nanoparticle form. The PC filter has a pore diameter of 200 nanometers, and a membrane comprising about 25 to 30-nm nanoparticles can be formed on those pores for the reason that the nanoparticles are linked together into fibers having mechanical stability.

### APPLICABILITY TO THE INDUSTRY

The nanoparticulate fiber solution of the invention, its fabrication process, and the nanoparticulate fiber membrane filter of the invention relates to a solution in which nanoparticulate fibers are highly dispersed without undergoing gelation and precipitation. The nanoparticulate fibers are obtained while dispersed in a poor solvent such as water so that they can be used in composite forms with a wide range of materials; for instance, they may be used in an ultrathin unwoven fabric form or the like.

This solution may be used for the purpose of easily fabricating nanoparticulate fiber membrane filters, and find a variety of applications in the industrial or biological and environmental fields, for instance, as ultra-filtration membranes, microfiltration membranes, high-performance filters and separators for lithium batteries. Further, the nanoparticulate fibers may be used for filters, adsorbents, composites or the like, and may be applied to the fabrication of industrial filters, and bio- or eco-filters.

PVDF in particular has a wide range of applications as water treatment membranes, and are expected to have a variety of applications as membrane bioreactor or other membranes because of their unique features other polymers do not have, for instance, chemical stability, solvent resistance and low protein adsorption.

### EXPLANATIONS OF THE REFERENCE NUMERALS

10: Nanoparticulate fiber membrane filter
11: Nanoparticles
12: Pores
15: Polymer
20: Filter
21: Base substance parts
22: Openings
30: Nanoparticulate fibers
31: Branching segment
32: elongated segment
40: Nanoparticulate fiber solution
42: Poor solvent
50: Vessel
51: Injector

## Claims

1. A nanoparticulate fiber solution having nanoparticulate fibers dispersed in a poor solvent, **characterized in that** said nanoparticulate fibers each comprise an elongated segment where a plurality of nanoparticles are linked together and elongated, and a branching segment where said elongated segment is branched off, wherein:
said nanoparticles each comprise polymer molecules and molecules of said poor solvent, and
said polymer molecules are entangled up and aggregated with the molecules of said poor solvent being held between said polymer molecules.

2. The nanoparticulate fiber solution as recited in claim 1, **characterized in that** said polymer has any one substituent of a hydroxyl group, an amino group or a fluoro group.

3. The nanoparticulate fiber solution as recited in claim 2, **characterized in that** said polymer is a copolymer comprising a monomer having any one substituent of a hydroxyl group, an amino group or a fluoro group.

4. The nanoparticulate fiber solution as recited in claim 1, **characterized in that** said poor solvent is water or an alcohol.

5. The nanoparticulate fiber solution as recited in claim 2, **characterized in that** a molecule of said poor solvent forms a hydrogen bond with said hydroxyl group or said amino group, or there is a hydrophobic interaction occurring between the molecule of said poor solvent and a group other than said fluoro group.

6. The nanoparticulate fiber solution as recited in claim 1, **characterized in that** said polymer is at least one polymer selected from the group consisting of polyvinyl phenol, polyaniline, polyvinylidene fluoride, cellulose, and polystyrene.

7. A process of fabricating the nanoparticulate fiber solution as recited in any one of claims 1 to 6,
**characterized by** comprising a step of dispersing a polymer in a good solvent to form a polymer solution, and a step of adding and stirring said polymer solution into and with a poor solvent.

8. The process of fabricating the nanoparticulate fiber solution as recited in claim 7, **characterized in that** said good solvent is an organic solvent.

9. The process of fabricating the nanoparticulate fiber solution as recited in claim 7, **characterized in that** said polymer solution has a polymer concentration of 0.05 mg/mL to 5 mg/mL inclusive.

10. The process of fabricating the nanoparticulate fiber solution as recited in claim 7,
**characterized in that** said nanoparticulate fiber solution has a polymer concentration ranging from 0.002 mg/mL to 0.2 mg/mL inclusive.

11. A nanoparticulate fiber membrane filter comprising nanoparticulate fibers each comprising an elongated segment where a plurality of nanoparticles are linked together and elongated, and a branching segment where said elongated segment is branched off,
**characterized in that** networked polymer nanoparticles of 1 nanometer to 100 nanometers inclusive in diameter are laminated together in a filter cake form of 50 nanometers to 1,000 nanometers inclusive in thickness.

12. The nanoparticulate fiber membrane filter as recited in claim 11, **characterized in that** said polymer nanoparticles have a diameter of 10 nanometers to 50 nanometers inclusive.

13. The nanoparticulate fiber membrane filter as recited in claim 11, **characterized in that** nanoparticles of said polymer are laminated together in a filter cake form of 100 nanometers to 500 nanometers inclusive in thickness.

14. The nanoparticulate fiber membrane filter as recited in any one of claims 11 to 13, **characterized in that** said polymer has any one substituent of a hydroxyl group, an amino group or a fluoro group.

15. A nanoparticulate fiber membrane filter, which is obtained by filtering off the nanoparticulate fiber solution recited in any one of claims 1 to 6 and aggregating the nanoparticulate fibers into a membrane form.

16. The nanoparticulate fiber membrane filter as recited in claim 15, **characterized by** having pores of 1 nanometer to 100 nanometers inclusive in diameter.

17. The nanoparticulate fiber membrane filter as recited in claim 15, **characterized by** including a molecule having a lower vapor pressure.

18. The nanoparticulate fiber membrane filter as recited in claim 17, **characterized in that** said molecule having a low vapor pressure is a molecule selected from the group consisting of glycerol, ethylene glycol, and polyethylene oxide.
